# EUROPEAN PATENT SPECIFICATION

(11) **EP 2 156 949 B1**
(45) Date of publication and mention of the grant of the patent: **19.11.2014**
(21) Application number: 08105073.4
(22) Date of filing: 19.08.2008
(51) Int. Cl.: B32B 27/30, B32B 27/32, B65D 65/40

(54) **Film suitable for vacuum skin packaging applications and easy-to-open vacuum skin package obtained therewith**
Für Vakuumhautverpackungsanwendungen geeigneter Film und damit hergestelltes einfach zu öffnendes Vakuumhautpaket
Film adapté aux applications d'emballage de peau sous vide et son emballage de peau sous vide facile à ouvrir

(43) Date of publication of application: 24.02.2010
(73) Proprietor: Cryovac, Inc., Duncan, SC 29334 (US)
(72) Inventor: Riccio, Marina, 20152 Milan (IT)
(74) Representative: Fraire, Cristina

(56) References cited:
- EP-A- 1 857 270
- US-B1- 6 476 137

## Description

### Technical Field

The present invention relates to a new thermoplastic film suitable for vacuum skin packaging applications and to an easy-to-open vacuum skin package obtained using said film. The VSP package is suitable for the presentation and preservation of a food product and for use in cooking, re-heating and/or thawing of the packaged food product in a microwave oven.

### Background Art

Vacuum skin packaging (hereinafter VSP) is a process well known in the art using a thermoplastic packaging material to enclose a food product. The vacuum skin packaging process is in one sense a type of thermoforming process in which an article to be packaged serves as the mold for a forming web. An article may be placed on a rigid or semi-rigid support member, that can be flat or shaped, e.g., tray-shaped, (hereinafter referred to as "bottom" web), and the supported article is then passed to a chamber where a flexible film (hereinafter referred to as "top" web or "skin" film) is first drawn upward against a heated dome and then draped down over the article. The movement of the top web is controlled by vacuum and/or air pressure, and in a vacuum skin packaging arrangement, the interior of the container is vacuumized before final welding of the top web to the bottom web. The distinguishing feature of a vacuum skin package is that the upper heated film forms a tight skin around the product and is sealed to the part of the support which is not covered by the product.

Vacuum skin packaging is described in many references, including FR 1,258,357, FR 1,286,018, US 3,491,504, US RE 30,009, US 3,574,642, US 3,681,092, US 3,713,849, US 4,055,672, and US 5,346,735.

A wide variety of products, especially food products like meat, sausages, cheese, ready meals, and the like, are being offered in visually attractive packages made using the vacuum skin packaging process.

Vacuum skin packaging is used for instance in so-called "case-ready" applications, wherein fresh raw products, like meat, poultry and fish, are packaged and stored under refrigerated conditions. Typically, this type of products are removed from the package before being cooked, however in some cases the product may be cooked from raw directly in the package by using a microwave oven.

Vacuum skin packaging is increasingly used also for the packaging of so-called "ready-meals", that is food products which only require thawing and/or re-heating to be ready for consumption. These types of products are often pasteurised in the package to prolong their shelf-life and the pasteurisation conditions may vary widely in terms of temperature and duration of the heat-treatment. Furthermore, thawing and/or re-heating of the product are usually carried out directly in the package.

Thus, the requirements for a VSP package are becoming more and more demanding as a consequence of the ever increasing number of products and applications in which vacuum skin packaging is used as well as the type of heat-treatments that the package must withstand.

A highly desirable feature in a VSP package, regardless of the product or application, is the ease of opening of the package. The seal between the top and the bottom webs should be sufficiently strong to withstand the expected abuse during the packaging, heat-treatment, distribution, and storage operations but at the same time it should have a sufficiently low seal strength to allow the end-user to easily open the package by hand. If the seal strength is too weak, then the package may open prematurely. However, if the seal is too strong opening may require the undesirable use of sharp tools.

It would also be desirable that the opening of the package did not cause "angel hair" or "fringes", that is small fragments of material that form or remain in the open seal area and which are visually unattractive to the end-user.

In general, films that form an acceptable and easy-to-open seal with a polar surface, such as an ionomer-based surface, generally do not tend to form an acceptable and easy-to-open seal with a non-polar surface, such as a LLDPE- or LDPE-based surface. Conversely, films that form an acceptable and easy-to-open seal with a non-polar surface generally do not tend to form an acceptable and easy-to-open seal with a polar surface. As a result, packagers that use both polar- and non-polar-surfaced substrates must currently purchase at least two separate types of film in order to provide an easy-to-open package. This increases the amount of film inventory that a packager must carry and also increases the complexity and cost of the manufacture of the easy-to-open package.

Another convenient feature that a VSP package should possess is the possibility to thaw, cook and/or re-heat the packaged food product directly in the package without the need of removing, loosening or perforating the top skin web before putting the package into the oven, without any risk of explosion and avoiding any substantial stretching of the top skin web. The package should in other words be self-venting, that is the top and bottom webs used in the package are selected in such a way that the top web is raised above the product by the pressure of the vapour generated by the product without being overstretched and a channel for venting the excess vapour is created between the top and the bottom webs. Preferably, a self-venting package should be also microwaveable.

Therefore there is a continuous need for improved VSP systems endowed with a higher versatility.

### Disclosure of Invention

It has now been found that when using as one of the top or the bottom web in a VSP package a multilayer film comprising a first outer sealant layer comprising a blend of from 10 to about 90 wt.% of LDPE and from 90 to 10 wt.% of an optionally neutralized ethylene/(meth)acrylic acid copolymer and a second layer adjacent to said sealant layer consisting of a frangible polymer blend as will be described below it is possible to obtain a package that is self-venting and easy-to-open regardless of the type of heat-treatment previously undergone by the package and it is free of defects upon opening, such as fringes or angel hairs. Furthermore, by using the inventive multilayer film as one of the webs in a VSP package it is possible to use as the second web a wider range of materials, with both polar- and non-polar-based sealing surfaces, without loosing the easy-to-open and self-venting capability of the VSP package thus obtained.

It is therefore a first object of the present invention a multilayer film suitable for use in VSP applications comprising a first outer sealant layer comprising a blend of from 10 to 90 wt. % of LDPE and from 90 to 10 wt.% of an optionally neutralized ethylene/(meth)acrylic acid copolymer and a second layer adjacent to said sealant layer consisting of a frangible polymer blend, wherein the frangible blend consists of

from 35 to 83 wt.% of an optionally neutralized ethylene/(meth)acrylic acid copolymer, of from 15 to 30 wt.% of a modified ethylene/vinyl acetate copolymer, and of from 2 to 50 wt.% of a polybutene, or

from 30 to 70 wt.% of a high vinyl acetate content ethylene/vinyl acetate copolymer, from 15 to 50 wt.% of a polybutene, and from 15 to 50 wt.% of an optionally neutralized ethylene/(meth)acrylic acid copolymer, or

from about 8 to about 30 wt. % of polypropylene modified by grafting an unsaturated carboxylic acid, from 0 to about 20 wt. % of polybutene and the complement to 100 wt. % of neutralized ethylene/(meth)acrylic acid copolymer. In one embodiment of this first object, the outer sealant layer of the multilayer film comprises a blend of from 10 to 90 wt.% of LDPE and from 90 to 10 wt.% of a neutralized ethylene/(meth)acrylic acid copolymer, and preferably said outer sealant layer essentially consists of a blend of from 10 to about 90 wt.% of LDPE and from 90 to 10 wt.% of a neutralized ethylene/(meth)acrylic acid copolymer.

In another embodiment of this first object, the outer sealant layer of the multilayer film comprises a blend of from 10 to 90 wt. % of LDPE and from 90 to 10 wt.% of an ethylene/(meth)acrylic acid copolymer, and preferably said outer sealant layer essentially consists of a blend of from 10 to 90 wt. % of LDPE and from 90 to 10 wt.% of an ethylene/(meth)acrylic acid copolymer.

A second object of the present invention is a VSP package comprising a first web comprising a first outer sealant layer comprising a blend of from 10 to 90 wt.% of LDPE and from 90 to 10 wt.% of an optionally neutralized ethylene/(meth)acrylic acid copolymer and a second layer adjacent to said sealant layer consisting of a frangible polymer blend as described above and a second web sealed to the first web and a product enclosed between said first and second webs. The second web comprises a sealant layer essentially consisting of a polymer selected from the group consisting of neutralized ethylene/(meth)acrylic acid copolymers, LDPE, ethylene/alpha-olefin copolymers and ethylene/vinyl acetate copolymers. The sealant layer of the second web is sealed to the sealant layer of the first web.

Preferably the first web is a bottom web and the second web is a top web, the product being enclosed in between.

A third object of the present invention is a thermoformed container made of the film of the first object, wherein the sealant layer of the film is the food contact layer of the container. Typically, the thermoformed container is in the form of a tray.

### DEFINITIONS

As used herein, the term "film" is used in the generic sense to refer to a plastic web, regardless of whether it is a film or a sheet. Films of and used in the present invention may have a thickness of up to 2 mm or more.

The phrase "outer layer" refers to any film layer having only one of its principal surfaces directly adhered to another layer of the film.

The phrase "inner layer" refers to any film layer having both of its surfaces directly adhered to another layer of the film.

The phrase "directly adhered", as applied to film layers, is defined as adhesion of a first film layer to a second film layer, without a tie layer, adhesive, or other layer there-between.

As used herein, the term "adjacent", when referred to two layers, is intended to refer to two layers that are directly adhered one to the other. In contrast, as used herein, the word "between", as applied to a film layer expressed as being between two other specified layers, includes both direct adherence of the subject layer to the two other layers it is between, as well as lack of direct adherence to either or both of the two other layers the subject layer is between, i.e., one or more additional layers can be imposed between the subject layer and one or more of the layers the subject layer is between.

As used herein, the phrases "seal layer", "sealing layer", "heat-seal layer", and "sealant layer", refer to an outer film layer involved in the sealing of the film to itself, another layer of the same or another film and/or another article which is not a film.

As used herein, the term "seal" or "heat-seal" refers to any seal of a first region of a film surface to a second region of a film surface, wherein the seal is formed by heating the regions to at least their respective seal initiation temperatures. The heating can be performed by anyone or more of a wide variety of manners, such as using a heated bar, hot air, infrared radiation, contact with a heated surface etc.

As used herein, "seal strength" reflects the strength of the seal between the bottom and the top web.

The term "frangible", as applied to polymer blends, refers to a polymer blend of at least two components selected in such a way that the internal cohesive forces holding together the blend are overcome during opening of the package. The term "frangible", as applied to a film layer, refers to a layer consisting of a frangible polymer blend. The internal cohesive forces of a frangible layer are lower than a heat-seal formed between the outer sealant layer of the multilayer film of the invention and the sealant layer of another film to which said film is sealed.

As used herein, "peel strength" reflects the strength required to pull apart the top and the bottom web and typically corresponds to the force required to overcome the internal cohesive forces of the frangible layer.

As used herein, the phrase "essentially consists of A" referred to a layer composition indicates that A represents no less than 95%, preferably no less than 97% and even more preferably no less than 98% of the total layer weight.

The term "microwaveable", as used in the present application, refers to films that are "substantially microwave-transparent" as well as those that are "microwave-active". While substantially microwave-transparent are those films or sheets capable of being crossed by at least 80%, preferably at least 90% of the microwaves generated by a microwave oven without any sort of interference therewith, the microwave-active ones are those that incorporate microwave reflective components intended to modify the energy deposition within the adjacent foodstuff. To be "microwaveable" in both cases, under the conditions of use, the packaging material should not be degraded or deformed and it should not release more than 60 ppm of global contaminants to the packaged food in contact therewith. In practice, packaging materials that withstand a heat treatment at 121 °C for ½ hour (conditions that are drastic enough not to be reached normally in microwave cooking) with only a slight, acceptable, deformation and releasing less than 60 ppm of contaminants, are considered to be "microwaveable" according to most of the food laws.

According to a first object of the present invention there is provided a multilayer film comprising a first outer sealant layer comprising a blend of from 10 to 90 wt.% of LDPE and from 90 to 10 wt.% of an optionally neutralized ethylene/(meth)acrylic acid copolymer and a second layer adjacent to said sealant layer consisting of a frangible polymer blend as described above.

LDPE, or low density polyethylene, is an ethylene homopolymer made using a free radical initiator at elevated pressures, usually in tubular or stirred reactors, causing numerous long chain branching to be formed along the polymer backbone. Typically the density of LDPE polymers ranges from about 0.86 g/cm³ to about 0.93 g/cm³. LDPE polymers suitable for the multilayer film of the invention have a density of from 0.9 g/cm³ to 0.925 g/cm³, preferably of from 0.91 g/cm³ to 0.925 g/cm³.

The expression " (meth) acrylic acid" is used herein to mean acrylic acid and/or methacrylic acid. An ethylene/(meth)acrylic acid copolymer is a copolymer of ethylene with an α,β ethylenically unsaturated monocarboxylic acidic monomer selected from acrylic acid and methacrylic acid. The copolymer typically contains from about 4 to about 18% by weight of acrylic or methacrylic acid units. Said copolymer can also contain, copolymerised therein, an alkyl (meth)acrylate, such as n-butyl acrylate or methacrylate or isobutyl acrylate or methacrylate. The term "EAA" is generally used to indicate a copolymer of ethylene and acrylic acid, whereas the term "EMAA" generally refers to a copolymer of ethylene and methacrylic acid. Useful ethylene/(meth)acrylic acid copolymers are commercially available from DuPont under the trademark Nucrel®, e.g, Nucrel® 1202, Nucrel® 1302 or under the trademark Elvaloy®, e.g. Elvaloy® 1214AC or from Dow Chemicals under the trademark Primacor, e.g. Primacor®1410.

A neutralized ethylene/(meth)acrylic acid copolymer, also referred to as "ionomer", is a copolymer of ethylene and acrylic and/or methacrylic acid having the carboxylic acid neutralized by a metal ion, such as zinc or, preferably, sodium. Typically neutralized ethylene/(meth)acrylic acid copolymers include at least 60 % by weight, preferably at least 70 % by weight and more preferably at least 80 % by weight of ethylene units. Useful neutralized ethylene/(meth)acrylic acid copolymers include those in which sufficient metal ion is present to neutralize from about 15 to about 60 % of the acid groups of the polymer. Useful neutralized ethylene/(meth)acrylic acid copolymers are commercially available from DuPont under the trademark Surlyn®, e.g, Surlyn® 1601, Surlyn® 1652, Surlyn® 1650, Surlyn® 1901 or Surlyn® 2601 or from ExxonMobil under the trademark lotek®, e.g. lotek® 3110.

In a first embodiment of the multilayer film of the invention the outer sealant layer comprises a blend of from 10 to 90 wt.%, from 15 to 85 wt.%, from 20 to 80 wt.%, from 25 to 75 wt.% from 30 to 70 wt.% of LDPE and from 90 to 10 wt.%, from 85 to 15 wt.%, from 80 to 20 wt.%, from 75 to 25 wt.%, from 70 to 30 wt.% of a neutralized ethylene/(meth)acrylic acid copolymer. Preferably said outer sealant layer essentially consists of a blend of from 10 to 90 wt.%, from 15 to 85 wt.%, from 20 to 80 wt.%, from 25 to 75 wt.%, from 30 to 70 wt.% of LDPE and from 90 to 10 wt.%, from 85 to 15 wt.%, from 80 to 20 wt.%, from 75 to 25 wt.%, from 70 to 30 wt.% of a neutralized ethylene/(meth)acrylic acid copolymer. More preferably said outer sealant layer essentially consists of a blend of from 20 to 80 wt.% of LDPE and from 80 to 20 wt.% of a neutralized ethylene/(meth)acrylic acid copolymer. Even more preferably said outer sealant layer essentially consists of a blend of from 30 to 70 wt.% of LDPE and from 70 to 30 wt.% of a neutralized ethylene/(meth)acrylic acid copolymer.

The neutralized ethylene/(meth)acrylic acid copolymer in the blend is preferably a neutralized ethylene/methacrylic acid copolymer, more preferably a sodium neutralized ethylene/methacrylic acid copolymer.

In a second embodiment of the multilayer film of the invention the outer sealant layer comprises a blend of from 10 to 90 wt.%, from 15 to 85 wt.%, from 20 to 80 wt.%, from 25 to 75 wt.%, from 30 to 70 wt.% of LDPE and from 90 to 10 wt.%, from 85 to 15 wt.%, from 80 to 20 wt.%, from 75 to 25 wt.%, from 70 to 30 wt.% of an ethylene/(meth)acrylic acid copolymer. Preferably, the outer sealant layer of the multilayer film essentially consists of a blend of from 10 to 90 wt.%, from 15 to 85 wt.%, from 20 to 80 wt.%, from 25 to 75 wt.%, from 30 to 70 wt.% of LDPE and from 90 to 10 wt.%, from 85 to 15 wt.%, from 80 to 20 wt.%, from 75 to 25 wt.%, from 70 to 30 wt.% of an ethylene/(meth)acrylic acid copolymer. More preferably said outer sealant layer essentially consists of a blend of from 20 to 80 wt.% of LDPE and from 80 to 20 wt.% of an ethylene/(meth)acrylic acid copolymer. Even more preferably said outer sealant layer essentially consists of a blend of from 30 to 70 wt.% of LDPE and from 70 to 30 wt.% of an ethylene/(meth)acrylic acid copolymer.

The ethylene/(meth)acrylic acid copolymer in the blend is preferably an ethylene/methacrylic acid copolymer.

Without being bound by theory it is believed that the appearance of the final VSP package at opening, and in particular the formation of angel hair or fringes between the webs, may be influenced by the mechanical properties of the blend making up the sealant layer of the film of the invention, in particular by its elongation at break. It has been found that when the blend of LDPE and the optionally neutralized ethylene/(meth)acrylic acid copolymer making up the outer sealant layer of the film has an elongation at break measured in the longitudinal direction in the range of from 450% to 120% opening of the package takes place without any visible defect. The elongation at break in the longitudinal direction is believed to be a more representative parameter for the selection of the suitable blend than the elongation at break in the transversal direction as the preferential direction of opening of a package typically takes place along the longitudinal direction of the film. Preferably the elongation at break in the longitudinal direction is between 430% to 150%, even more preferably between 400% and 200%. A clean, uniform opening without fringes is obtained regardless of the polar or non-polar nature of the sealant layer of the second web sealed to the film of the invention and of the heat-treatment undergone by the package.

The blends suitable for the sealant layer of the film of the invention further have a tensile strength in the longitudinal direction in the range of from 150 to 300 kg/cm².

Blends of LDPE and a neutralized ethylene/(meth)acrylic acid copolymer useful as the sealant layer for the film of the invention typically have an elongation at break in the longitudinal direction in the range of from 400%, 380% to about 250%, 270%. Blends of 30 to 70 wt.% LDPE and 70 to 30 wt.% sodium neutralized ethylene/methacrylic acid copolymer typically have elongation at break values in the longitudinal direction comprised between 350% and 300%.

Blends of LDPE and ethylene/methacrylic acid copolymers useful as the sealant layer for the film of the invention typically have an elongation at break in the longitudinal direction in the range of from 450%, 430% to about 250%, 270%. Blends of 30 to 70 wt.% LDPE and 70 to 30 wt.% ethylene/methacrylic acid copolymer with 11.5 wt.% of methacrylic acid monomer typically have elongation at break values in the longitudinal direction comprised between 270% and 400%.

The outer sealant layer typically has a thickness of from 0.5 to 5 µm, of from 1.0 to 4 µm, of from 1.5 to 3.5 µm.

The multilayer film of the present invention comprises a second layer that is directly adhered to the above described outer sealant layer and that consists of a frangible polymer blend as described above. The internal cohesive force of the frangible polymer blend is designed to be lower than the seal strength formed in the end package between the above outer sealant layer and the other web to which the film is sealed.

Frangible polymer blends typically comprise a first component and at least a second "incompatible" component that acts as a "contaminant" to weaken the internal cohesive force of the blend, optionally combined with a third component.

Depending on the composition of the frangible polymer blend the frangible layer thickness may be in the range of from 0.5 to 12 µm, from 2 to 10 µm, from 3 to 8 µm.

As used herein the term "modified ethylene/vinyl acetate copolymer" refers to an ethylene/vinyl acetate based copolymer modified either by the incorporation of a third monomer in the polymer chain, such as carbon monoxide, or by blending or preferably by grafting the polymer chain, with an unsaturated carboxylic acid, e.g., maleic acid, fumaric acid or the like, or a derivative thereof such as the anhydride, ester or metal salt or the like.

Polybutene, as used herein, refers to semi-crystalline homopolymers of butene-1, suitable for the manufacture of cast or blown films. Grades of polybutene that are preferably employed have a melting point higher than 115 °C. Examples of suitable commercial grades are Polybutene-1 PB 0110M and Polybutene-1 PB 0300M both by LyondellBasell.

As used herein the term "high vinyl acetate content ethylene/vinyl acetate copolymer" refers to an ethylene/vinyl acetate copolymer containing from more than 40 to about 80 wt.% of vinyl acetate, e. g. those currently sold by Lanxess as Levamelt^{®} grades.

The multilayer film of the present invention may include one or more layers in addition to the sealant layer and the adjacent frangible layer. The additional layer(s) may be coated, extruded, co-extruded or laminated to the surface of the frangible layer not adhering to the sealant layer. The multilayer film may include any number of layers, for example the multilayer film may include a total of any of the following: from 2 to 20 layers, at least 3 layers, at least 4 layers, at least 5 layers, and from 5 to 9 layers. The multilayer film will preferably comprise also a second outer layer, possibly an intermediate gas-barrier layer, and tie or adhesive layers, if necessary, to improve the bond between adjacent layers of the film. The film may also comprise one or more bulk layers to provide the necessary thickness to the film and improve the mechanical properties thereof, i.e. increase puncture resistance, increase abuse resistance, etc.

For the second outer layer, the bulk layers, if any, and the tie layers of the film of the present invention, any type of microwaveable resin can be employed. Examples of resins that can suitably be employed include ethylene homo-and co-polymers, propylene homo- and co-polymers, neutralized ethylene/(meth)acrylic acid copolymers, polyesters, polyamides and any other thermoplastic material that under the conditions of use will not be altered by microwaves.

Ethylene homopolymers include high density polyethylene (HDPE) and low density polyethylene (LDPE). Ethylene copolymers include ethylene/alpha-olefin copolymers and ethylene/unsaturated ester copolymers. Ethylene/alpha-olefin copolymers generally include copolymers of ethylene and one or more comonomers selected from alpha-olefins having from 3 to 20 carbon atoms, such as propylene, 1-butene, 1-pentene, 1-hexene, 1-octene, 4-methyl-1-pentene and the like. Ethylene/alpha-olefin copolymers generally have a density in the range of from about 0.86 to about 0.94 g/cm³. The term linear low density polyethylene (LLDPE) is generally understood to include that group of ethylene/alpha-olefin copolymers which fall into the density range of about 0.915 to about 0.94 g/cm³ and particularly about 0.915 to about 0.925 g/cm³. Sometimes linear polyethylene in the density range from about 0.926 to about 0.94 g/cm³ is referred to as linear medium density polyethylene (LMDPE). Lower density ethylene/alpha-olefin copolymers may be referred to as very low density polyethylene (VLDPE) and ultra-low density polyethylene (ULDPE). Ethylene/alpha-olefin copolymers may be obtained by either heterogeneous or homogeneous polymerization processes.

Ethylene/unsaturated ester copolymers are copolymers of ethylene and one or more unsaturated ester monomers. Useful unsaturated esters include vinyl esters of aliphatic carboxylic acids, where the esters have from 4 to 12 carbon atoms, such as vinyl acetate, and alkyl esters of acrylic or methacrylic acid, where the esters have from 4 to 12 carbon atoms, such as butyl acrylate or methacrylate.

Useful propylene copolymers include propylene/ethylene copolymers (EPC), which are copolymers of propylene and ethylene wherein a major amount of the polymer is propylene, and propylene/ethylene/butene terpolymers (EPB), which are copolymers of propylene, ethylene and 1-butene.

The term "polyamides" includes aliphatic homo- or co-polyamides commonly referred to as e.g. polyamide 6 (homopolymer based on ε-caprolactam), polyamide 69 (homopolycondensate based on hexamethylene diamine and azelaic acid), polyamide 610 (homopolycondensate based on hexamethylene diamine and sebacic acid), polyamide 612 (homopolycondensate based on hexamethylene diamine and dodecandioic acid), polyamide 11 (homopolymer based on 11-aminoundecanoic acid), polyamide 12 (homopolymer based on w-aminododecanoic acid or on laurolactam), polyamide 6/12 (copolymer based on ε-caprolactam and laurolactam), polyamide 6/66 (copolymer based on ε-caprolactam and hexamethylenediamine and adipic acid), modifications thereof and blends thereof. Said term also includes crystalline or partially crystalline, aromatic or partially aromatic, polyamides such as polyamide 6I/6T(copolymer based on ε-caprolactam and isophthalic acid and terephthalic acid).

The term "polyesters" refers to polymers obtained by the polycondensation reaction of dicarboxylic acids with dihydroxy alcohols. Suitable dicarboxylic acids are, for instance, terephthalic acid, isophthalic acid, 2,6-naphthalene dicarboxylic acid and the like. Suitable dihydroxy alcohols are for instance ethylene glycol, diethylene glycol, 1,4-butanediol, 1,4-cyclohexanedimethanol and the like. Examples of useful polyesters include poly(ethylene 2,6-naphtalate), poly(ethylene terephthalate), and copolyesters obtained by reacting one or more dicarboxylic acids with one or more dihydroxy alcohols.

If the film of the present invention is used as the top web of the VSP package, the resins used should also be easily formable as the top web needs to be stretched and softened in the heated dome of the VSP machine before being draped down on the product and the bottom web. On the other hand, no particularly strict requirement exists in case the film of the present invention is used as the bottom web in the VSP process, except a certain degree of thermoformability in case a shaped bottom is required in the final package.

When the film of the present invention is used as the bottom web of a VSP package, the second outer layer and/or preferably the bulk layer(s) possibly present in the structure can be foamed. Physical or preferably chemical foaming of bulk layers of polypropylene or polyester resins may give a rigid or semi-rigid sheet with good mechanical properties that still can be thermoformed to give a tray-, cup-, or bowl-shaped bottom support for the product.

The gas-barrier layer, if present, generally includes a polymeric material with low oxygen transmission characteristics, such as PVDC, EVOH, polyamides, polyesters or blends thereof.

PVDC is any vinylidene chloride copolymer wherein a major amount of the copolymer comprises vinylidene chloride and a minor amount of the copolymer comprises one or more unsaturated monomers copolymerisable therewith, typically vinyl chloride, and alkyl acrylates or methacrylates (e.g. methyl acrylate or methacrylate) and the blends thereof in different proportions. Generally a PVDC barrier layer will contain plasticisers and/or stabilizers as known in the art.

EVOH is the saponified product of ethylene-vinyl ester copolymers, generally of ethylene/vinyl acetate copolymers, wherein the ethylene content is typically comprised between 20 and 60 % by mole and the degree of saponification is generally higher than 85 % preferably higher than 95 %.

Preferably however the gas-barrier layer will comprise EVOH, possibly blended with a minor amount of a polyamide.

When gas-barrier properties are required the thickness of the gas-barrier layer will be suitably selected in order to provide the overall structure with an oxygen transmission rate (evaluated by ASTM D3985 at room temperature and 0 % relative humidity) of less than 200 cm³/m².atm.d, e.g., less than 100 cm³/m².atm.d, or less than 50 cm³/m².atm.d when the film is used as the bottom web in a VSP package; when the film is used as the top web the thickness of the gas-barrier layer will be set to provide the film with an oxygen transmission rate of less than 10 cm³/m².d.atm, preferably less than 5 cm³/m².d.atm.

One or more of any of the layers of the film of the present invention may include appropriate amounts of additives typically included in food packaging films, as it is known to those of skill in the art. For example, a layer may include additives such as slip agents, antiblock agents, antioxidants, fillers, pigments and dyes, radiation stabilizers, antistatic agents, cross-linking inhibitors or cross-linking enhancers, and the like, as known in the art.

The film of the present invention can be obtained by any suitable process known in the art for manufacturing films, such as extrusion, co-extrusion, lamination, extrusion lamination. Preferably the film is obtained by a co-extrusion process, either through a flat or a round extrusion die, preferably by cast co-extrusion or by hot-blown. Preferably, for use as the top web of a VSP package the film of the present invention is substantially non oriented. Also for use as or in the bottom web of a VSP package the film of the present invention is preferably substantially non oriented. Oriented and heat-set films might however be suitably employed for the bottom web.

The film of the present invention, or only one or more of the thermoplastic layers thereof, may be cross-linked to e.g. improve the strength of the film and/or its heat resistance. Cross-linking may be achieved by using chemical additives or by subjecting the film layers to an energetic radiation treatment, such as a high-energy electron beam treatment, to induce cross-linking between molecules of the irradiated material. Cross-linking is preferred when the film of the invention is used as the top web, mostly to increase the heat resistance of the film that has to be brought in contact with the heated dome.

The multilayer film of the present invention may have a widely varying thickness. In particular when the film is used as a liner to be laminated to a substrate and used as the bottom web in a VSP package or when it is used in other packaging applications for thin films, its thickness may range e.g. from 15-20 µm to 40-50 µm; when it is used as the top web in a VSP package or when it is used in other packaging applications for thick films, its thickness may range from 50-60 µm to 150-200 µm; while, when it is used as the bottom web in a VSP package, its thickness may range from 200-250 µm to e.g., 900-2,000 µm, depending on whether it is solid or partially foamed.

Preferably, the multilayer film of the present invention is used as the bottom web in the final VSP package. In such a case the bottom web could consist of the film of the present invention optionally laminated to a suitable substrate, to give a rigid or semi-rigid web with a thickness up to about 2,000 µm, preferably up to about 1,200 µm, generally comprised between about 200 and about 900 µm.

As used herein the term "rigid" refers to a sheet of thermoplastic material that, when held horizontally by one only of its corners, is able to support itself in substantially a horizontal position, and that can tolerate a certain amount of physical force, such as pressure or vacuum, without being deformed. The term "semi-rigid" refers to a sheet of thermoplastic material that, when held horizontally by one only of its corners, is able to support itself in substantially a horizontal position, but whose shape may change if pressure, vacuum, or some other force is applied thereto.

In a first embodiment the film of the present invention may be used as a liner and laminated to a substrate and the substrate/film composite may then be used as the bottom web in a VSP package. In such a case the film would typically comprise a first outer sealant layer comprising a blend of 10 to 90 wt.% of LDPE and 90 to 10 wt.% of an optionally neutralized ethylene/(meth)acrylic acid copolymer, an adjacent layer consisting of a frangible polymer blend, a tie layer, an optional barrier layer and a second outer lamination layer. Heat lamination or glue lamination could be employed for the manufacture of said composite, starting from the film of the invention and the suitably selected substrate. Any mono- or multilayer, solid or foamed or partially foamed, sheet of materials could be a suitable substrate. Preferably the substrate is of a microwaveable material. In a preferred embodiment a solid or foamed polypropylene or polyester layer or cardboard can be used as a suitable substrate.

In an alternative embodiment the film may be used directly as the bottom web in a VSP package. In such a case the film would typically comprise the first outer sealant layer comprising a blend of 10 to 90 wt.% of LDPE and 90 to 10 wt.% of an optionally neutralized ethylene/(meth)acrylic acid copolymer, an adjacent layer consisting of a frangible polymer blend, tie layers, one or more bulk layers, an optional gas-barrier layer and a second outer layer.

A second object of the present invention is a VSP package comprising a first web comprising an outer sealant layer comprising a blend of from 10 to 90 wt.% of LDPE and from 90 to 10 wt. % of an optionally neutralized ethylene/(meth)acrylic acid copolymer and an adjacent layer consisting of a frangible polymer blend as described above, a second web comprising a sealant layer and a product enclosed between said first and second webs, wherein the sealant layers of said first and second webs are sealed to each other.

It has been found that when using the film of the first object as the first web in a VSP process it is possible to obtain a VSP package which is easy-to-open and self-venting and free of visual defects, such as angel hair or fringes, upon opening. Furthermore, the film of the invention forms reliable seals with second webs having their sealant layers selected from the group consisting of neutralized ethylene/(meth)acrylic acid copolymers, LDPE, ethylene/alpha-olefin copolymers, ethylene/vinyl acetate copolymers and blends thereof.

The film of the invention may be the bottom or the top web in the final VSP package. According to a preferred embodiment the VSP package of the present invention comprises a first bottom web comprising an outer sealant layer comprising a blend of from 10 to 90 wt.% of LDPE and from 90 to 10 wt. % of an optionally neutralized ethylene/(meth)acrylic acid copolymer, and an adjacent layer consisting of a frangible polymer blend as described above and a second skin film sealed to the bottom web.

Typically the skin film is a flexible multilayer material comprising a first outer sealant layer, optionally a gas barrier layer and a second outer heat-resistant layer.

Suitable polymers for the sealant layer of the second web in the VSP package of the invention are LDPE, ethylene/alpha-olefin copolymers, ethylene/vinyl acetate copolymers, neutralized ethylene/(meth)acrylic acid copolymers and blends thereof. Preferred materials for the sealant layer are LDPE, LLDPE, neutralized ethylene/(meth)acrylic acid copolymers, ethylene/vinyl acetate copolymers and blends thereof. More preferred materials for the sealant layer are LDPE and neutralized ethylene/(meth)acrylic acid copolymers.

Depending on the product to be packaged the skin film may comprise a gas barrier layer. The gas barrier layer typically comprises oxygen impermeable resins like PVDC, EVOH, polyamides and blends of EVOH and polyamides.

Common polymers for the outer heat-resistant layer are for instance ethylene homo- or co-polymers, ethylene/cyclic-olefin copolymers, such as ethylene/norbornene copolymers, propylene homo- or co-polymers, neutralized ethylene/(meth)acrylic acid copolymers, polyesters, polyamides.

The film may also comprise other layers such as adhesive layers, bulk layers and the like to provide the necessary thickness to the film and improve the mechanical properties thereof, such as puncture resistance, abuse resistance, formability and the like.

As described for the film of the invention, the skin film is typically obtained by any suitable co- extrusion process, either through a flat or a round extrusion die, preferably by cast co-extrusion or by hot-blown. Preferably, the skin film, or only one or more of the layers thereof, is cross-linked to e.g. improve the strength of the film and/or the heat resistance when the film is brought in contact with the heating platen during the vacuum skin packaging process.

Films suitable as skin films have a thickness in the range of from 50 to 200 µm, from 70 to 150 µm.

Suitable films for use as top skin films in the VSP package of the present invention are for instance those sold by Cryovac® under the trade names TS201®, TH300®, VST™0250, VST™0280 which comprise a sealant layer consisting of LDPE, or VST™0291, TH301®, which comprise a sealant layer consisting of a neutralized ethylene/methacrylic acid copolymer.

In one preferred embodiment the first web of the VSP package according to the present invention will comprise a first outer sealant layer comprising a blend of from 10 to 90 wt.% of LDPE and from 90 to 10 wt.% of an optionally neutralized ethylene/methacrylic acid copolymer and an adjacent layer consisting of a frangible polymer blend as described above and a second web comprising a sealant layer of LDPE. Preferably in said embodiment the first web of the VSP package is a bottom web and the second web is a top skin film.

In another preferred embodiment the first web of the VSP package according to the present invention will comprise a first outer sealant layer comprising a blend of from 10 to 90 wt.% of LDPE and from 90 to 10 wt.% of an optionally neutralized ethylene/methacrylic acid copolymer and an adjacent layer consisting of a frangible polymer blend as described above and a second web comprising a sealant layer of neutralized ethylene/methacrylic acid copolymer. Preferably in said embodiment the first web of the VSP package is a bottom web and the second web is a top skin film.

Typically in the VSP package of the present invention the outer sealant layers of the first and second webs are sealed to each other with a seal strength of at least 2 N/25.4 mm.

The VSP package can be made by a conventional VSP process and using conventional VSP equipment, such as a Multivac® CD 6000 machine wherein a bottom web is thermoformed in-line with the vacuum skin packaging process.

In an alternative vacuum skin packaging process, preformed containers, such as dishes, trays, bowls or the like, made of a suitable material, preferably comprising or consisting of the film of the invention, are used. Once the product has been arranged into the tray, the product loaded tray is placed in a VSP equipment for the skin packaging cycle. Conventional machines to carry out this alternative process are for instance a Mondini^{®} E340 or a Multivac® T200.

Thus, a third object of the present invention is a thermoformed container made of the multilayer film of the first object. The outer sealant layer of the multilayer film forms the internal surface of the container, that is the surface which will be in contact with the product and to which a top web will be sealed.

Non-limiting example of suitable thermoforming techniques are vacuum forming, by which a preheated softened sheet is disposed on a molding portion having the shape of a desired product, the air present in the gap between the molding portion of the molding die and the sheet is eliminated by pulling vacuum so that the sheet conforms to the contours of the mold or match mold assist forming in which a plug matching the internal shape of the mold is used to guide the deformation of the sheet.

The thermoformed container is preferably in the form of a tray comprising a flat bottom wall, upwardly extending side-walls terminating in a horizontal outwardly extending flange, which forms the periphery of container, although other shapes are possible.

The VSP package according to the second object of the present invention can be put into the microwave oven, without opening it or puncturing the top web, and heated without any problem. The vapour released by the food product during the microwave treatment will raise the top skin over the product, thus creating a sort of vapour cushion around the product that maintains the product texture and taste. When the vapour pressure reaches a threshold value, then the package will open up and the excess vapour vented off through a channel that creates between the top and bottom webs of the package. This prevents an excessive stretching of the skin film and the bursting of the package. At the end of the cooking cycle, when no additional vapour is generated by the product, the top skin film will lower on top of the product. The package can then be withdrawn from the oven, the top skin removed. No particular care has to be taken while removing the top skin film as the hot vapour has already been vented off during the cooking cycle.

Furthermore, when the package is opened and the top skin film removed, either before or after the microwave heating, no fringes are visible in the area of opening of the seal.

The following examples are given only to better illustrate the present invention. They should not be interpreted however as a limitation to the scope thereof.

### EXAMPLES

The properties of packages according to the present invention were tested in different conditions.

The packages were made by the vacuum skin packaging process using a Multivac® T200 machine using thermoformed trays made of films according to the present invention. The tray size was 14 x19 cm with a depth of 5 cm.

The films for the trays consisted of a co-extruded liner film made by a hot-blown process heat laminated to a polypropylene substrate having the final layer sequence (the thickness of each layer expressed in µm is indicated in parenthesis):

| | | | | | |
|---|---|---|---|---|---|
| Sealant layer (2) | Frangible blend layer (6) | Tie layer (9) | Barrier layer (6) | Bulk/lamination layer (20) | Polypropylene substrate (50) |

In order to have identical conditions, only the sealant layer and the frangible blend layer were varied while all the other structural characteristics, such as composition of the other layers, thickness of all the layers and process parameters were held identical or constant respectively.

The top skin film was a coextruded multilayer film comprising the layer sequence: sealant layer / tie / bulk / tie / barrier / tie / outer layer.

Two skin films were tested with different sealant layer compositions: 100% LDPE and 100% neutralised ethylene/methacrylic acid copolymer (ionomer).

**Table 1**

| | Tray | | Skin film | Fringes | | Peel strength (N/25.4 mm) | |
|---|---|---|---|---|---|---|---|
| | Sealant layer | Frangible layer | Sealant layer | No HT | HT | No HT | HT |
| Ex. 1 | LDPE 50% + EMAA 50% | A | LDPE | 3 | | 4.8 | |
| | | | ionomer | 3 | 3 | 5.0 | 4.2 |
| Ex. 2 | LDPE 50% + EMAA 50% | B | LDPE | 3 | | 6.6 | |
| | | | ionomer | 3 | 3 | 4.8 | 6.1 |
| Ex. 3 | LDPE 60% + IO 40% | A | LDPE | 2 | | 3.7 | |
| | | | ionomer | 2 | 3 | 3.9 | 4.0 |
| C. Ex. 1 | LMDPE 70% + IO 30% | A | LDPE | 1 | | | |
| C. Ex. 2 | IO | B | LDPE | 2 | | 1.6 | |
| | | | ionomer | 3 | 3 | 3.4 | 3.6 |
| C. Ex. 3 | EVA | A | LDPE | 1 | | 3.1 | |
| | | | ionomer | 1 | 1 | 3.5 | 4.1 |
| C. Ex. 4 | LMDPE 70%+ VLDPE 30% | A | LDPE | 1 | | 3.3 | |
| | | | ionomer | 2 | | 1.5 | |

In Table 1 above and in the following Table 2:
LDPE : LD259 from ExxonMobil, a low density polyethylene with a density of 0.915 g/cm³;
EMAA: Nucrel® 1202 HC from DuPont, an ethylene/metacrylic acid copolymer with 11.5 wt.% methacrylic acid;
IO: Surly® 1601 from DuPont, a sodium neutralized ethylene/methacrylic acid copolymer with a density of 0.940 g/cm³;
LMDPE: Dowlex® SC2108G from Dow Chemicals, a linear medium density ethylene/1-octene copolymer with a density of 0.935 g/cm³;
EVA: Escorene® Ultra FL00909 from ExxonMobil, an ethylene/vinyl acetate copolymer with 9.4 wt.% vinyl acetate;
VLDPE: Affinity® PL1880 from Dow Chemicals, a very low density ethylene/1-octene copolymer with a density of 0.902 g/cm³;
Frangible layer A = 58 wt.% of a neutralized ethylene/methacrylic acid copolymer (Surlyn® 1601), 22 wt.% of a modified ethyelene/vinyl acetate copolymer (Elvaloy® 741 from Dupont), and 20 wt.% of a polybutylene (PB8640M from LyondellBasell)
Frangible layer B = 40 wt.% of a neutralized ethylene/methacrylic acid copolymer (Surlyn® 1601), 35 wt.% of an ethylene/acrylic acid copolymer (Primacor®1410 from Dow Chemicals) and 25 wt.% of a polybutene (PB0300M from LyondellBasell).

For the evaluation of the peel strength between the top web and the bottom web in a finished package, the following internal standard procedure was employed: strips having a width of 25.4 mm and a length of 300 mm are cut from mock VSP packages prepared starting from the suitably selected top and bottom webs sealed together in a VSP packaging cycle (e.g., using a Multivac® T200 machine) under the setting conditions of actual use; the packages were stored at room temperature (no HT) or subjected to a heat treatment at 100°C for one hour in an autoclave (HT). To start the measurement, the two webs are manually separated until the bottom web may be fixed into the lower clamp of a dynamometer, and the top web into the upper clamp of the dynamometer, taking care that the area to be tested lies in the middle of the two clamps and that an adequate tensioning between the two extremities of the fixed sample is obtained; the peel strength is then measured with a crosshead speed of 200 mm/min and a jaw distance of 30 mm. A measured value of less than 2 N/25.4 mm is considered as an insufficient seal to withstand the physical and thermal stresses that a package is typically subjected to.

The presence of fringes upon opening of the packages was evaluated by visually checking packages prepared as described above after manual opening. The results were assessed on a scale from 1 to 3 with the following meanings:
3= good-- the area of opening is uniform and with no fringes;
2= acceptable-- few fringes present in the area where opening is initiated;
1= not acceptable-- the area of opening is not uniform and fringes are present in the whole area.

The self-venting capability of the packages was tested as follows:
packages containing lasagne were made in a VSP packaging cycle (using a Multivac® T200 machine) under the setting conditions of actual use using trays made of the films of Examples 1 to 3 and VST™0291 sold by Cryovac®, with a sealant layer consisting of an ionomer, as the skin film. They were heated in a microwave oven for 2 and ½ minutes on a high setting (900 watts). This was to evaluate how the top web allows for self-venting, controlled stretching of the skin film and easy peel after cooking. With all the films of the invention self-venting was noticed within about one minute of microwave heating. The packages were then removed from microwave. The top skin film peeled easily from the bottom web with no fringes in the area of opening.

To determine the tensile properties of the sealant blend of the film of the invention monolayer films of each blend of about 35 µm in thickness were prepared on a Brabender small-scale extruder equipped with a flat die. The tensile properties of the films were determined using an Instron tensile tester equipment according to ASTM D-882. The data of the elongation at break and of the tensile strength in the longitudinal (LD) and transversal (TD) directions for different sealant layer compositions are shown in Table 2.

**Table 2**

| | Elongation (%) | | Tensile strength (kg/cm²) | |
|---|---|---|---|---|
| | LD | TD | LD | TD |
| LDPE 70% + EMAA 30% | 390 | 320 | 223 | 112 |
| LDPE 60% + EMAA 40% | 380 | 310 | 271 | 112 |
| LDPE 50% + EMAA 50% | 270 | 320 | 286 | 121 |
| LDPE 30% + EMAA 70% | 300 | 270 | 340 | 113 |
| LDPE 70% + IO 30% | 330 | 110 | 209 | 90 |
| LDPE 60% + IO 40% | 350 | 73 | 195 | 82 |
| LDPE 50% + IO 50% | 300 | 120 | 225 | 92 |
| LDPE 30% + IO 70% | 300 | 210 | 268 | 107 |
| LMDPE 70% + IO 30% | 310 | 570 | 122 | 244 |
| LMDPE 70%+ VLDPE 30% | 610 | 800 | 201 | 285 |
| EVA | 460 | 590 | 186 | 131 |
| IO | 120 | 490 | 429 | 206 |

## Claims

1. A multilayer film suitable for use in VSP applications comprising a first outer sealant layer comprising a blend offrom 10 to 90 wt. % of LDPE and of from 90 to 10 wt. % of an optionally neutralized ethylene/ (meth) acrylic acidcopolymer and a second layer adjacent to said outer layer consisting of a frangible polymer blend, wherein the frangible blend consists of
from 35 to 83 wt. % of an optionally neutralized ethylene/ (meth) acrylic acid copolymer, of from 15 to 30 wt. % of a modified ethylene/ vinyl acetate copolymer, and of from 2 to 50 wt. % of a polybutylene, or
from 30 to 70 wt. % of a high vinyl acetate content ethylene/ vinyl acetate copolymer, from 15 to 50 wt. % of a polybutene, and from 15 to 50 wt. % of an optionally neutralized ethylene/ (meth) acrylic acid copolymer, or
from about 8 to about 30 wt. % of polypropylene modified by grafting an unsaturated carboxylic acid, from 0 to about 20 wt. % of polybutene and the complement to 100 wt. % of neutralized ethylene/ (meth) acrylic acid copolymer.

2. The multilayer film of claim 1 wherein the sealant layer comprises a blend of from 10 to 90 wt. % of LDPE and 90to 10 wt. % of a neutralized ethylene/ (meth) acrylic acid copolymer.

3. The multilayer film of claim 2 wherein the neutralized ethylene/ (meth) acrylic acid copolymer is a sodium neutralizedethylene/ methacrylic acid copolymer.

4. The multilayer film of claim 1 wherein the sealant layer comprises a blend of from 10 to 90 wt. % of LDPE and 90 to10 wt. % of an ethylene/ (meth) acrylic acid copolymer.

5. The multilayer film of claim 4 wherein the ethylene/ (meth) acrylic acid copolymer is an ethylene/ methacrylic acidcopolymer having 11.5 wt. % methacrylic acid.

6. The multilayer film of any preceding claim wherein the LDPE has a density in the range of from 0.91 to 0.925 g/cm3.

7. The multilayer film of any preceding claim wherein the blend making up the sealant layer has an elongation at breakmeasured in the longitudinal direction of less than 450%.

8. The multilayer film of any one of claims 1 to 7 wherein the frangible polymer blend consists of about 40 wt. % of a neutralized ethylene/ methacrylic acid copolymer, about 35 wt. % of an ethylene/ acrylic acid copolymer and about25 wt. % of a polybutene.

9. A VSP package comprising a first web consisting of the multilayer film of any one of claims 1 to 8 and a second webcomprising an outer sealant layer comprising a polymer selected from the group consisting of neutralized ethylene/(meth) acrylic acid copolymers, LDPE, ethylene/ alpha- olefin copolymers and ethylene/ vinyl acetate copolymerswherein the sealant layers of said first and second webs are sealed to each other.

10. The package of claim 9 wherein the sealant layer of said second web consists of LDPE.

11. The package of claim 9 wherein the sealant layer of said second web consists of a neutralized ethylene/ (meth)acrylic acid copolymer.

12. The package of any one of claims 9 to 11 wherein said first web is a bottom web and said second web is a skin film.

13. A thermoformed container made of the multilayer film of any one of claims 1 to 8.

## Patentansprüche

1. Mehrschichtfolie, die sich für Vakuum-Skin-Verpackungen (VSP) eignet, umfassend eine erste äußere Siegelschicht, die eine Mischung aus 10 bis 90 Gewichtsprozent Polyethylen niederer Dichte (LDPE) und 90 bis 10 Gewichtsprozent optional neutralisiertes Ethylen-(Meth)acrylsäure-Copolymer umfasst, sowie eine zweite äußere Schicht, die neben der äußeren Schicht liegt und aus einer fragilen Polymermischung besteht, wobei die fragile Mischung
zu 35 bis 83 Gewichtsprozent aus einem optional neutralisierten Ethylen-(Meth)acrylsäure-Copolymer, zu 15 bis 30 Gewichtsprozent aus einem modifizierten Ethylen-Vinylacetat-Copolymer und zu 2 bis 50 Gewichtsprozent aus einem Polybutylen besteht, oder
zu 30 bis 70 Gewichtsprozent aus einem Ethylen-Vinylacetat-Copolymer mit hohem Vinylacetatgehalt, zu 15 bis 50 Gewichtsprozent aus einem Polybuten und zu 15 bis 50 Gewichtsprozent aus einem optional neutralisierten Ethylen-(Meth)acrylsäure-Copolymer besteht, oder
zu ca. 8 bis ca. 30 Gewichtsprozent aus einem durch Pfropfen mit einer ungesättigten Carbonsäure modifizierten Polypropylen und zu 0 bis ca. 20 Gewichtsprozent aus Polybuten besteht und wobei sich der verbleibende Anteil, um 100 Gewichtsprozent zu erreichen, aus neutralisiertem Ethylen-(Meth)acrylsäure-Copolymer zusammensetzt.

2. Mehrschichtfolie nach Anspruch 1, wobei die Siegelschicht eine Mischung aus 10 bis 90 Gewichtsprozent LDPE und 90 bis 10 Gewichtsprozent eines neutralisierten Ethylen-(Meth)-acrylsäure-Copolymers umfasst.

3. Mehrschichtfolie nach Anspruch 2, wobei es sich bei dem neutralisierten Ethylen-(Meth)-acrylsäure-Copolymer um ein natriumneutralisiertes Ethylen-Methacrylsäure-Copolymer handelt.

4. Mehrschichtfolie nach Anspruch 1, wobei die Siegelschicht eine Mischung aus 10 bis 90 Gewichtsprozent LDPE und 90 bis 10 Gewichtsprozent Ethylen-(Meth)acrylsäure-Copolymer umfasst.

5. Mehrschichtfolie nach Anspruch 4, wobei es sich beim Ethylen-(Meth)acrylsäure-Copolymer um ein Ethylen-Methacrylsäure-Copolymer mit 11,5 Gewichtsprozent Methacrylsäure handelt.

6. Mehrschichtfolie nach einem der vorgenannten Ansprüche, wobei das LDPE eine Dichte im Bereich von 0,91 bis 0,925 g/cm3 aufweist.

7. Mehrschichtfolie nach einem der vorgenannten Ansprüche, wobei die Mischung, welche die Siegelschicht bildet, eine Bruchdehnung in Längsrichtung von weniger als 450 % aufweist.

8. Mehrschichtfolie nach einem der Ansprüche 1 bis 7, wobei die fragile Polymermischung aus ca. 40 Gewichtsprozent eines neutralisierten Ethylen-Methacrylsäure-Copolymers, ca. 35 Gewichtsprozent eines Ethylen-Acrylsäure-Copolymer und ca. 25 Gewichtsprozent eines Polybutens besteht.

9. Vakuum-Skin-Verpackung, umfassend eine erste Bahn, die aus der Mehrschichtfolie gemäß einem der Ansprüche 1 bis 8 besteht, und eine zweite Bahn, die eine äußere Siegelschicht umfasst, welche ein Polymer ausgewählt aus der Gruppe bestehend aus neutralisierten Ethylen-(Meth)acrylsäure-Copolymeren, LDPE, Ethylen-alpha-Olefin-Copolymeren und Ethylen-Vinylacetat-Copolymeren umfasst, wobei die Siegelschichten der ersten und zweiten Bahnen aneinander gesiegelt sind.

10. Verpackung nach Anspruch 9, wobei die Siegelschicht der zweiten Bahn aus LDPE besteht.

11. Verpackung nach Anspruch 9, wobei die Siegelschicht der zweiten Bahn aus neutralisiertem Ethylen-(Meth)acrylsäure-Copolymer besteht.

12. Verpackung nach einem der Ansprüche 9 bis 11, wobei die erste Bahn eine untere Bahn und die zweite Bahn eine Skin-Folie ist.

13. Thermogeformter Behälter, der aus der Mehrschichtfolie gemäß einem der Ansprüche 1 bis 8 hergestellt ist.

## Revendications

1. Film multi-couches approprié pour une utilisation dans des applications VSP comprenant une première couche de scellement externe comprenant un mélange de 10 à 90 % en poids de LDPE et de 90 à 10 % en poids d'un copolymère éthylène/acide (méth)acrylique facultativement neutralisé et une seconde couche adjacente à ladite couche externe consistant en un mélange polymère frangible, le mélange frangible consistant en :
- de 35 à 83 % en poids d'un copolymère éthylène/acide (méth)acrylique facultativement neutralisé, de 15 à 30 % en poids d'un copolymère éthylène/acétate de vinyle modifié, et de 2 à 50 % en poids d'un polybutylène, ou
- de 30 à 70 % en poids d'un copolymère éthylène/acétate de vinyle à teneur élevée en acétate de vinyle, de 15 à 50 % en poids d'un polybutène et de 15 à 50 % en poids d'un copolymère éthylène/acide (méth)acrylique facultativement neutralisé, ou
- d'environ 8 à environ 30 % en poids d'un polypropylène modifié par greffage d'un acide carboxylique insaturé, de 0 à environ 20 % en poids de polybutène et le complément à 100 % en poids de copolymère éthylène/acide (méth)acrylique neutralisé.

2. Film multi-couches selon la revendication 1, dans lequel la couche de scellement comprend un mélange de 10 à 90 % en poids de LDPE et de 90 à 10 % en poids d'un copolymère éthylène/acide (méth)acrylique neutralisé.

3. Film multi-couches selon la revendication 2, dans lequel le copolymère éthylène/acide (méth)acrylique neutralisé est un copolymère éthylène/acide méthacrylique neutralisé par sodium.

4. Film multi-couches selon la revendication 1, dans lequel la couche de scellement comprend un mélange de 10 à 90 % en poids de LDPE et de 90 à 10 % en poids d'un copolymère éthylène/acide (méth)acrylique.

5. Film multi-couches selon la revendication 4, dans lequel le copolymère éthylène/acide (méth)acrylique est un copolymère éthylène/acide méthacrylique ayant 11,5 % en poids d'acide méthacrylique.

6. Film multi-couches selon l'une quelconque des revendications précédentes, dans lequel le LDPE a une masse volumique se situant dans la plage de 0,91 à 0,925 g/cm³.

7. Film multi-couches selon l'une quelconque des revendications précédentes, dans lequel le mélange composant la couche de scellement a un allongement à la rupture mesuré dans la direction longitudinale de moins de 450 %.

8. Film multi-couches selon l'une quelconque des revendications 1 à 7, dans lequel le mélange polymère frangible consiste en environ 40 % en poids d'un copolymère éthylène/acide méthacrylique neutralisé, d'environ 35 % en poids d'un copolymère éthylène/acide acrylique et d'environ 25 % en poids d'un polybutène.

9. Emballage VSP comprenant une première bande consistant en le film multi-couches selon l'une quelconque des revendications 1 à 8 et une seconde bande comprenant une couche de scellement externe comprenant un polymère choisi dans le groupe consistant en copolymères éthylène/acide (méth)acrylique neutralisés, LDPE, copolymères éthylène/alpha-oléfine et copolymères éthylène/acétate de vinyle, les couches de scellement desdites première et seconde bandes étant scellées l'une à l'autre.

10. Emballage selon la revendication 9, dans lequel la couche de scellement de ladite seconde bande consiste en LDPE.

11. Emballage selon la revendication 9, dans lequel la couche de scellement de ladite seconde bande consiste en un copolymère éthylène/acide (méth)acrylique neutralisé.

12. Emballage selon l'une quelconque des revendications 9 à 11, dans lequel ladite première bande est une bande inférieure et ladite seconde bande est un film de peau.

13. Récipient thermoformé fait du film multi-couches selon l'une quelconque des revendications 1 à 8.
